# EUROPÄISCHE PATENTSCHRIFT

(11) **EP 1 073 598 B1**
(45) Veröffentlichungstag und Bekanntmachung des Hinweises auf die Patenterteilung: **05.09.2001**
(21) Anmeldenummer: 99923455.2
(22) Anmeldetag: 23.04.1999
(51) Int. Cl.: B65G 47/08, B65G 57/00, B65B 35/30

(54) **VORRICHTUNG ZUM BEHANDELN VON FLASCHEN**
DEVICE FOR PROCESSING BOTTLES
DISPOSITIF POUR LE TRAITEMENT DE BOUTEILLES

(30) Priorität: 23.04.1998 DE 29807325 U; 14.10.1998 DE 29818293 U
(43) Veröffentlichungstag der Anmeldung: 07.02.2001
(73) Patentinhaber: Certus Maschinenbau GmbH, 86316 Friedberg (DE)
(72) Erfinder: HÖFER, Gunter, D-86931 Prittriching (DE)
(74) Vertreter: Ernicke, Hans-Dieter, Dipl.-Ing.
(86) Internationale Anmeldenummer: EP9902754
(87) Internationale Veröffentlichungsnummer: WO9955604

(56) Entgegenhaltungen:
- WO-A-98/47795
- DE-A- 3 142 078
- DE-A- 19 535 907
- FR-A- 2 593 776
- FR-A- 2 697 512

## Beschreibung

Die Erfindung betrifft eine Anlage zum Behandeln von Flaschen, insbesondere von leeren Kunststoff-Flaschen.

Aus der DE-A-195 35 907 ist eine Sammel- und Palettiervorrichtung für leere Glasflaschen bekannt. Sie besteht aus einem Palettierer und einer vorgeschalteten Sammeleinrichtung, welche mit einem Flaschenförderer verbunden ist. Die Sammeleinrichtung dient zur Übernahme und Lagenbildung der reihenweise von dem Flaschenförderer zugeführten Flaschen. Die Sammeleinrichtung besteht aus einem Stautisch oder einem Stauband, dem die Flaschen reihenweise vom Flaschenförderer zugeführt werden. Die Flaschen wandern dann stehend schräg über das Stauband ohne Führung und werden in Gassen geschoben, an deren Ende sie von einer Schiebevorrichtung übernommen und gruppiert werden. Die Schiebevorrichtung übergibt die Flaschen dann an ein quer laufendes Förderband, auf dem sie zunächst freistehend transportiert und dann an Anschlägen gestaut und zu einer Flaschenlage zusammengeschoben werden. Am Bandende kann sie der Palettierer mit Flaschengreifern lageweise erfassen und auf einem Palettenboden unter Einschieben von Zwischen- und Decklagen zu einem Flaschenstapel, der sogenannten Palette, aufbauen. Diese Sammel- und Palettiertechnik ist für schwere und standfeste Flaschen geeignet und setzt im wesentlichen gleiche Kapazitäten von Flaschenzuführung und Palettierer voraus. Für leichtgewichtige Kunststoff-Flaschen, insbesondere sogenannte PET-Flaschen, ist sie hingegen nicht mit ausreichender Sicherheit verwendbar. Diese Flaschenarten sind wegen ihres niedrigen Gewichtes, wegen elektrostatischer Aufladung und aufgrund der hohen Zuführgeschwindigkeit des Flaschenförderers schwer zu handhaben. Außerdem sind die Eingriffs- und Steuermöglichkeiten an dieser Anlage zu gering.

Es ist Aufgabe der vorliegenden Erfindung, eine bessere Flaschenbehandlungsanlage aufzuzeigen.

Die Erfindung löst diese Aufgabe mit den Merkmalen im Hauptanspruch.
Die Gestaltung der Flaschenbehandlungsanlage mit Sammeleinrichtung, transportablen Zwischenträgern und Lager ermöglicht es, die Flaschen zwischen den einzelnen Behandlungsstellen bzw. Bearbeitungsvorgängen zwischenzupuffern. Hierdurch wird die Kapazität der Anlage, ihre Flexibilität und auch ihre Betriebssicherheit deutlich erhöht. Eine Pufferbildung innerhalb der Anlage hat dabei den großen Vorteil, daß sie einen relativ geringen Kostenaufwand mit sich bringt. Insbesondere sind dadurch die bisher üblichen und sehr teuren Luftförderer entbehrlich. Diese Luftförderer dienten als Puffer zwischen Flaschenerzeuger und Sammeleinrichtung bzw. Palettierer und mußten eine entsprechende Länge haben. Bei dem erfindungsgemäßen anlageninternen Lager ist der Kosten-, Bau- und Platzaufwand wesentlich verringert. Zudem ist die Pufferfunktion erheblich verbessert und vergrößert worden.

Die Erfindung bietet: eine Vielzahl von Funktions- und Gestaltungsvarianten der Flaschenbehandlungsanlage. Dies gilt mit Hinblick auf die steigerbare Anlagenkapazität, auf die genannten Speichermöglichkeiten und verschiedene interne und externe Trägerkreisläufe. Insbesondere ist es von Vorteil, daß der Zwischenträger während des Umsetzvorganges stehen kann, was für eine hohe Absetz- und Positioniergenauigkeit sorgt. Die Lagenbildung auf dem Zwischenträger erlaubt eine palettiergerechte Kommissionierung der Flaschen und eine hohe Palettierkapazität.

Die erfindungsgemäßen Zwischenträger haben vorzugsweise eine Flaschenführung. Dadurch haben die Flaschen eine gesicherte Lage und lassen sich auch zum Entpalettieren und zum erneuten Vereinzeln an einer Füllanlage oder dergleichen positionsgenau entnehmen. Durch die erfindungsgemäße Gestaltung des Zwischenträgers und auch der Sammeleinrichtung können die Flaschen nicht mehr umfallen und können keine Betriebsstörungen verursachen. Insbesondere ist die erfindungsgemäße Anlage in der Lage, auch Flaschen mit sehr hoher Zuführgeschwindigkeit aufzunehmen, reihenweise überzusetzen, in Lagen zuzuordnen und den Zwischenträger entsprechend zu beladen. Die erfindungsgemäße Anlage hat dadurch ein sehr hohes Leistungsvermögen.

Von besonderem Vorteil ist, daß auch der Reihenschluß der mit seitlichem Abstand zugeführten Flaschenreihen mit hoher Sicherheit vorgenommen wird. Der Reihenschluß erfolgt beim Übersetzen innerhalb der Greifeinrichtung des Umsetzers durch seitlich verstellbare Reihengreifer. Die Flaschen können dann in der letztendlich auf dem Zwischenträger gebildeten Flaschenlage in dichter und für die letztendliche Palettierung geeigneter Lage angeordnet sein.

Die erfindungsgemäße Anlage läßt sich dabei auch mit relativ geringem Aufwand auf unterschiedliche Flaschenformate einstellen und umrüsten.

Bei der erfindungsgemäßen Ausgestaltung der Flaschenbehandlungsanlage ist die Fehler- und Ausfallneigung weitgehend minimiert. Dies erhöht die Betriebssicherheit der gesamten Anlage. Die Kapazitätsfrage kann durch das Zwischenlager gelöst werden. Dies ermöglicht insbesondere einen zentralen Palettierer für die gesamte Anlage und eine weitere Verringerung des Ausfallrisikos. Der Speicher gleicht einerseits die unterschiedlichen Massendurchsätze der Flaschenerzeuger und des zentralen Palettierers oder einer anderen Flaschenbehandlungseinrichtung, z.B. einer Waschanlage, einer Füllanlage oder dergleichen aus und kann andererseits als Puffer bei Ausfall oder Störung einzelner Anlagenkomponenten dienen. Vor allem ist der Flaschenerzeuger von irgendwelchen Störeinflüssen aus dem Bereich Palettierer oder Fördersystem entkoppelt.

Die erfindungsgemäße Flaschenbehandlungsanlage kann zu einer größeren Anlage ausgebaut werden, wobei die einzelnen Anlagen einander überschneiden und ergänzen können. Hierbei lassen sich auch die Anzahl und Zuordnung der einzelnen Komponenten, insbesondere der Sammeleinrichtungen, der Palettierer oder dergleichen in geeigneter Weise anpassen.

Die erfindungsgemäße Anlage erfordert trotz hoher Sicherheit einen relativ geringen konstruktiven und steuertechnischen Aufwand. Sie braucht auch wenig Platz und läßt sich in der vorerwähnten Weise beliebig ausbauen. Sie kann auch an bestehenden Anlagen nachgerüstet werden. Die erfindungsgemäße Anlage ist nicht an bestimmte Materialien oder Formate von Flaschen gebunden, sondern kann für beliebige Flaschen eingesetzt werden. Sie erfordert ferner kein besonders ausgebildetes Bedienungspersonal.

Die Zwischenträger zirkulieren innerhalb der Flaschenbehandlungsanlage und dienen zum lageweisen Transport der leeren Flaschen zwischen Flaschenerzeuger und Palettierer oder anderen Flaschenbehandlungseinrichtungen. Darüber hinaus können die Zwischenträger aber auch in einem größeren Kreislauf zirkulieren, indem sie selbst als Palettenbestandteil fungieren und zusammen mit den leeren Flaschen zunächst zur Füllanlage und vorn dort gegebenenfalls auch weiter über die Handelsverbindungen bis zum Kunden gelangen. Von hier aus können sie gegebenenfalls auch wieder zurück in die Flaschenbehandlungsanlage geführt werden. Diese Form von Zwischenträgern mit einer vorzugsweise permanenten Flaschenführung im gesamten Kreislauf erleichtert die verschiedenen Flaschenbehandlungsvorgänge und vereinfacht den Bau- und Maschinenaufwand beim Flaschenerzeuger, Befüller und bei der Logistik.

In den Unteransprüchen sind hierbei einige besonders vorteilhafte Ausführungsformen für die Gestaltung der Zwischenträger angegeben. Die Ausbildung als Stülpboden ist besonders einfach und kostengünstig. Die Ausführung als Display-Träger hat den Vorteil, daß der Zwischenträger für den externen Kreislauf und den Weg bis zum Kunden optimal geeignet ist. Bei entsprechender Ausbildung kann der Display-Träger als Leergut im Kreislauf wieder zurückkommen. Er kann aber auch als Einweg-Verpackung an geeigneter Stelle entsorgt werden. Ein Zwischenträger mit Lamellenboden bietet besonders günstige Möglichkeiten für die Lagenbildung und das Umsetzen der Flaschen, wobei die Kinematik der Sammeleinrichtung vereinfacht und verbessert werden kann. Zudem läßt sich ein solcher Zwischenträger in analoger Weise auch wieder entladen, wobei sich die gleichen Vorteile ergeben.

Die erfindungsgemäßen Zwischenträger können als Multiformat-Träger für unterschiedliche Flaschenarten- und größen konzipiert sein. Sie können aber auch zumindest von der Innenraumgestaltung her auf einen speziellen Flaschentyp abgestellt sein. Dementsprechend können in der Flaschenbehandlungsanlage unterschiedliche Zwischenträger oder gleiche Zwischenträger vewendet werden. Die Zwischenträger haben vorzugsweise untereinander die gleiche Größe, können aber auch in dieser Beziehung variieren.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen:
- Figur 1:: eine Flaschenbehandlungsanlage mit einer Sammel- und Palettieranlage in einem Anlagenschema,
- Figur 2:: die Sammeleinrichtung einer Sammel- und Palettiervorrichtung in einer perspektivischen Darstellung,
- Figur 3:: eine Draufsicht auf eine Variante der Sammeleinrichtung von Figur 2,
- Figur 4:: eine weitere Variante zu Figur 2 und 3 in vergrößerter Draufsicht und
- Figur 5, 6 und 7:: verschiedene Varianten von Zwischenträgern.

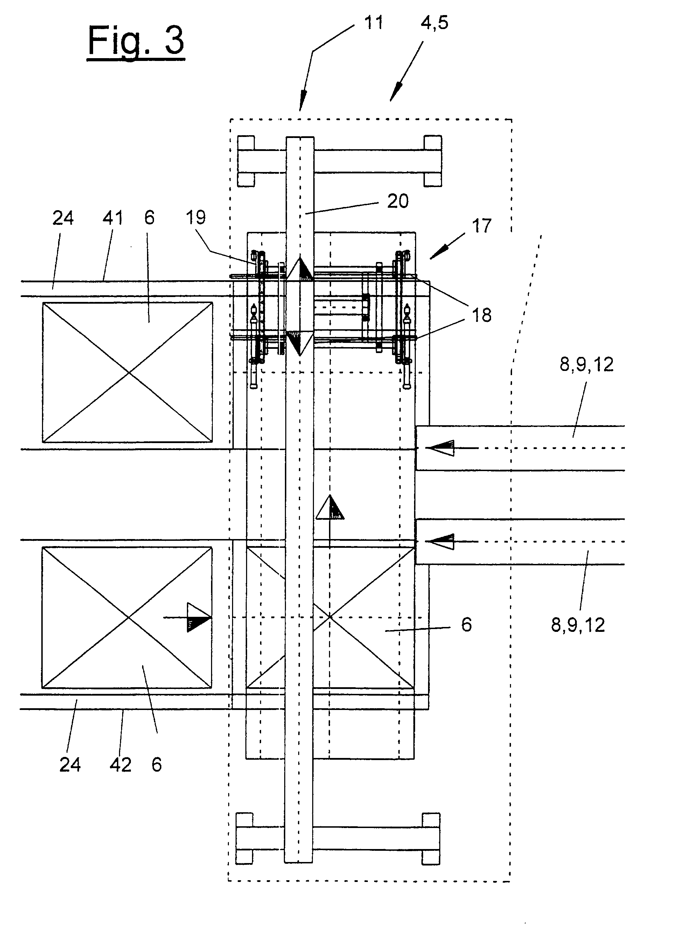

Figur 3 verdeutlicht: in einem Schemaplan eine Flaschenbehandlungsanlage (1) für Flaschen (3). Hierbei handelt es sich vorzugsweise um leere Flaschen (3), insbesondere leere Kunststoffflaschen, speziell PET-Flaschen. Die Flaschenbehandlungsanlage (1) besitzt zumindest eine Sammeleinrichtung (4) für die Flaschen (3), mehrere transportable Zwischenträger (6) und mindestens ein Lager (37) für die Zwischenträger (6).

Die Flaschenbehandlungsanlage (1) kann als Sammel- und Palettieranlage (2) ausgebildet sein und hat mindestens einen Palettierer (7). An Stelle des Palettierers (7) oder zusätzlich kann eine andere Flaschenbehandlungseinrichtung, z.B. eine Füllanlage, eine Waschanlage, eine Etikettierstation oder dgl. vorhanden sein.

Die Sammeleinrichtungen (4) weisen ein oder mehrere Umsetzer (5) auf, die die beweglichen bzw. transportablen Zwischenträger (6) mit Flaschen (3) beladen. Die Zwischenträger (6) verbinden die Sammeleinrichtung (4) mit dem Lager (37), dem oder den Palettierern (7) und dem oder den anderen Flaschenbehandlungseinrichtung (en).

Die Sammeleinrichtung (4) nimmt die in ein oder mehreren einbahnigen Schlangen, Reihen oder Strängen (9) von einem Flaschenerzeuger (36) über ein oder mehrere Flaschenförderer (8) zugeführten Flaschen (3) auf, sammelt sie in Flaschenlagen (25) und belädt die Zwischenträger (6). Der Palettierer (7) stapelt die Flaschenlagen (25) zu mehrlagigen Paletten (35) auf. An den Palettierer (7) können sich ausgangsseitig ein oder mehrere Verpackungseinrichtungen (33) nebst Ausgabestationen (34) anschließen.

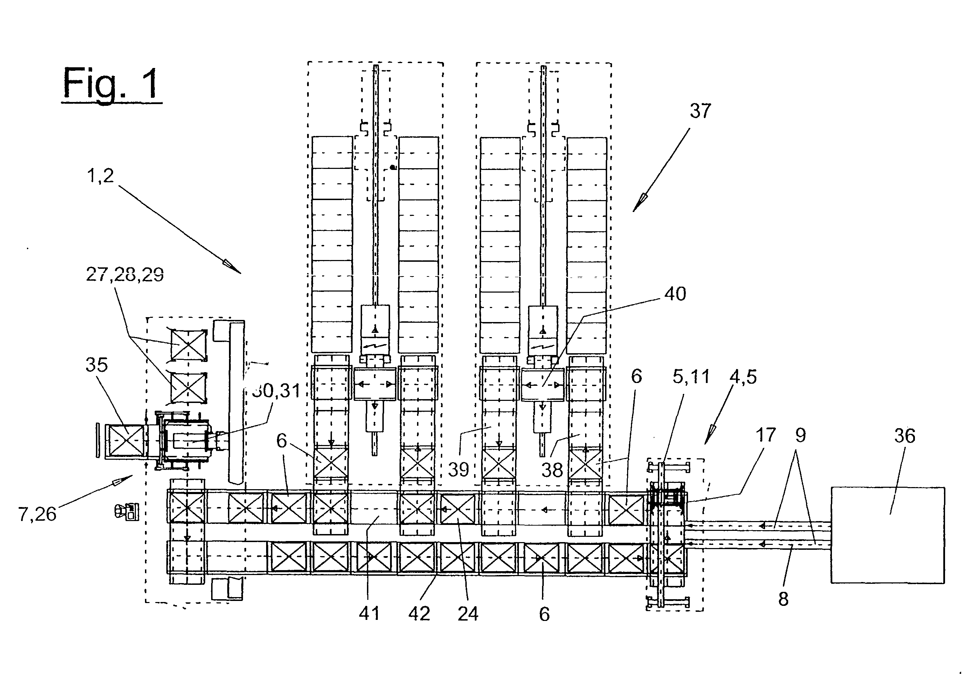

In der gezeigten Ausführungsform von Figur 1 hat die Flaschenbehandlungsanlage (1) z.B. eine Sammel- und Palettieranlage (2) mit je einer Sammeleinrichtung (4) und einem Palettierer (7). Alternativ können mehrere angeordnet sein. An die Sammeleinrichtung (4) sind zwei Flaschenförderer (8) angeschlossen. Die Flaschenförderer (8) können in beliebig geeigneter Weise, z.B. als Luftförderer ausgebildet sein. Diese weisen einen geschlitzten Luftströmungskanal auf, in dem die Flaschen (3) an dem besagten Kragen hängend geführt und von einer im Kanal entlangschießenden Luftströmung vorwärts getrieben werden. Die Flaschen (3) bewegen sich im Flaschenförderer (8) mit einer sehr hohen Geschwindigkeit von z.B. zehn Flaschen pro Sekunde. Um die Flaschen (3) trotzdem noch handhaben zu können, wird jeder Flaschenförderer (8) nach und nach über Weichen in mehrere Stränge (9) aufgeteilt. An den Sammel- und Palettieranlagen münden dann beispielsweise mehrere solcher Stränge (9) parallel nebeneinander.

Der Flaschenerzeuger (36) besteht z.B. aus ein oder mehreren Blasmaschinen für Kunststoff-Flaschen. Er kann in größerem Abstand zu der Sammel- und Palettieranlage (2) angeordnet sein, wodurch die Flaschenförderer (8) eine entsprechend große Länge haben und dazu vorzugsweise in der vorerwähnten Art als Luftförderer ausgebildet sind.

In der gezeigten Ausführung von Figur 1 befindet sich der Flaschenerzeuger (36) in unmittelbarer Nähe an der Sammel- und Palettieranlage (2). Die Flaschenförderer (8) sind hier vorzugsweise als kurze und gerade Förderer ausgebildet, die die vom Flaschenerzeuger (36) produzierten und laufend ausgegebenen Flaschen (3) in beispielsweise zwei Schlangen oder Strängen (8) an die Sammeleinrichtung (4) mit dem Umsetzer (5) übergeben. Vor oder an der Übergabestelle können sich auch Verzweigungen auf mehr als zwei Stränge (9) befinden.

Der oder die Flaschenförderer (8) können in beliebig geeigneter Weise ausgebildet sein. Es können beispielsweise kurze Luftförderer sein. Es kann sich aber auch um eine beiliebige andere geeignete Konstruktion handeln, z.B. Gleitförderer. Vorzugsweise können die Flaschenförderer (8) eine geeignete und vorzugsweise kleine Staustrecke oder Pufferstrecke zur Übergabe der kontinuierlich in Schlangen hintereinander zugeführten Flaschen (3) an den intermittierend arbeitenden Umsetzer (5) aufweisen. In einer abgewandelten Ausführungsform kann der Flaschenerzeuger (36) seine Flaschen (3) auch direkt an den Umsetzer (5) übergeben.

Wie Figur 1 im werteren verdeutlicht, hat die Sammel- und Palettieranlage (2) mindestens ein Zwischenlager (37), das zwischen der Sammeleinrichtung (4) und dem Palettierer (7) angeordnet ist. Für den Transport der einzeln beweglichen Zwischenträger (6) ist eine Transporteinrichtung (24) vorgesehen, die hin- und hergeht oder vorzugsweise im Kreislauf arbeitet und einen Vorlauf (41) und einen Rücklauf (42) aufweist. Die Transporteinrichtung (24) verbindet die Sammeleinrichtung (4) mit dem Palettierer (7). Außerdem ist auch das Zwischenlager (37) an die Transporteinrichtung (24) und dabei vorzugsweise an deren Vorlauf (41) angeschlossen.

Das Zwischenlager (37) kann in beliebig geeigneter Weise ausgebildet sein, z.B. als Hochregallager. Es kann ein oder mehrere Lagerreihen aufweisen mit entsprechend ein oder mehreren geeigneten Regalförderzeugen (40). Die einzelnen Lagerbereiche haben jeweils eine Eingabe (38) und eine Ausgabe (39) für die beladenen Zwischenträger (6), die beide vorzugsweise an den Vorlauf (41) angeschlossen sind. Das Regalförderzeug (40) übernimmt dann regalintern die Zwischenträger (6) von der Eingabe und speichert sie in den vorgesehenen Lagerpositionen. Umgekehrt erfolgt vom Regalförderzeug (40) die Auslieferung der Zwischenträger (6) über die Ausgabe (39). Über den Vorlauf (41) gelangen sie dann direkt zum Palettierer (7).

Das Zwischenlager (37) für die beladenen Zwischenträger (6) kann unterschiedliche Funktionen haben. Einerseits kann es als Puffer vor einer Füllanlage (nicht dargestellt) dienen, insbesondere wenn der Flaschenerzeuger (36) und die Füllanlage unterschiedliche Kapazität haben. Aus Kostengründen ist es zum Beispiel sinnvoll, eine kleine und kapazitätsarme Blasmaschine (36) einzusetzen, die rund um die Uhr 24h am Tag in Betrieb ist. Hierbei kann es für die Produktion unterschiedlicher Flaschengrößen vorteilhaft sein, mehrere solcher kleiner Blasmaschinen (36) parallel nebeneinander anzuordnen. Dies erspart kosten- und zeitaufwendige Umrüstungen einer größeren Blasmaschine auf unterschiedliche Flaschenarten.

Die Füllanlage hat dann eine entsprechend höhere Kapazität und kann die von einer kleinen Blasmaschine (36) hergestellten Flaschen in 8h abfüllen. Das Lager (37) puffert die 16h Betriebszeit. Das Lager (37) kann dabei mehrere Abteilungen zur sortenreinen Lagerung der unterschiedlichen Flaschenarten besitzen. Die Fülleinrichtung wird dadurch von der Flaschenerzeugung entkoppelt und kann je nach Bedarf beliebige Arten und Mengen von Flaschen (3) befüllen. Die unterschiedlichen Flaschenerzeuger (36) können unabhängig hiervon kontinuierlich arbeiten. Vor der Füllanlage ist dann eine entsprechende Entpackungsanlage (nicht dargestellt) angeordnet, die die Flaschenlagen (25) von den Zwischenträgern (6) entnimmt und die Flaschen (3) für die Zuführung zum Füllvorgang vereinzelt.

In einer weiteren Variante kann sich an die Füllanlage der in Figur 1 dargestellte Palettierer (7) anschließen. Hierbei ist hinter der Füllanlage eine zweite Sammeleinrichtung (4) mit einem Umsetzer (5) angeordnet, die die reihenweise von der Füllanlage zugeführten vollen Flaschen (3) wieder unter Bildung von Flaschenlagen (25) auf Zwischenträger (6) umsetzt oder direkt an den Palettierer (7) übergibt.

In einer anderen Varante kann das Zwischenlager (37) als relativ kleines Lager ausgebildet sein und lediglich als Puffer zur Sicherstellung der Produktion, z.B. als sogenannter 5-min-Puffer, dienen. Die an der Sammeleinrichtung (4) beladenen Zwischenträger (6) werden dann nur bei Bedarf, z.B. bei Betriebsstörungen oder Engpässen am Palettierer (7), in das Zwischenlager (37) gebracht. Im normalen Betrieb werden sie jedoch direkt von der Sammeleinrichtung (4) zum Palettierer (7) transportiert.

In einer weiteren Variante können mehrere Blasmaschinen oder Flaschenerzeuger (36) parallel nebeneinander angeordnet sein, die unterschiedliche Flaschen produzieren. Im Lager (37) kann eine sortenreine Zwischenlagerung erfolgen. Dies ist z.B. vorteilhaft, wenn nur ein Palettierer (7) vorhanden ist, der zunächst die eine Flaschenart palettiert. Im Lager (37) werden dann die andere(n) Flaschenart(en) zwischengespeichert.

Die aus Sammeleinrichtung (4) und Lager (37) bestehende Flaschenbehandlungsanlage (1) kann auch unabhängig von einem Flaschenerzeuger (36) einer Füllanlage (nicht dargestellt) vorgeordnet sein. Die Sammeleinrichtung (4) kann in diesem Fall als Basis-Entpalettierer für von außen in beliebig geeigneter Weise zugeführte Leerflaschen-Paletten ausgebildet sein. Dieser Entpalettierer löst die Palettenlagen auf und verfrachtet die leeren Flaschen (3) auf die Zwischenträger (6). Im Lager (37) können die Zwischenträger (6) vor der Flaschenbefüllung zwischengepuffert werden.

Auf dem Rücklauf (42) werden vom Palettierer (7) die entladenen und leeren Zwischenträger (6) der Sammeleinrichtung (4) mit dem Umsetzer (5) wieder zugeführt. Hierbei kann der Rücklauf (42) eine Staustrecke besitzen. An den Rücklauf (42) kann aber auch ein eigenes Lager für die Pufferung der Zwischenträger (6) angeschlossen sein. Dieses Trägerlager ist der Übersicht halber nicht dargestellt.

Der Vorlauf (41) und der Rücklauf (42) sind vorzugsweise als gerade Förderstränge ausgebildet. Es kann sich hierbei um Förderbänder, Rollengänge oder andere geeignete Fördermittel handeln. An den Endpunkten findet über entsprechende Querförderer eine Umsetzung der Zwischenträger (6) statt. An dem endseitigen Querförderer übernimmt der Palettierer (7) die Flaschenlagen (25) von den Zwischenträgern (6), so daß die leeren Zwischenträger (6) dann auf den Rücklauf (42) zurückfahren können. Am vorderen Ende befindet sich der Querförderer im Bereich der Sammeleinrichtung (4) bzw. des Umsetzers (5). Dadurch können ohne Zeit- und Taktunterbrechung sehr schnell fertig beladene Zwischenträger (6) auf den Vorlauf (41) abgefördert und neue leere Zwischenträger (6) in die Beladeposition gebracht werden. Dadurch kann außerdem während des Transports und während der Entladung am Palettierer (7) bereits der nächste leere Zwischenträger (6) an der Sammeleinrichtung (4) beladen werden.

Die Flaschen (3) bestehen vorzugsweise 'aus Kunststoff, insbesondere Polytetrafluoräthylen. Diese sogenannten PET-Flaschen sind dünnwandig und haben ein niedriges Gewicht. Am Flaschenhals besitzen sie einen umlaufenden und seitlich vorstehenden Kragen, an dem sie z.B. durch die Flaschenförderer (8) hängend gegriffen und geführt werden können. Am Boden haben diese Flaschen in der Regel eine zentrale Einbuchtung und am umgebenden Rand mehrere hochlaufende Einkerbungen, so daß die Standfläche von fünf rund um die Flaschenmittelachse verteilten Auflagepunkten gebildet wird. Der Durchmesser der Standfläche ist dabei kleiner als der Außendurchmesser der Flaschen, so daß die PET-Flaschen eine gewisse Labilität haben. Die Flaschen (3) können sich außerdem elektrostatisch aufladen und sich dadurch gegenseitig abstoßen. Durch die geringe Standfestigkeit und das niedrige Gewicht reagieren die Flaschen (3) empfindlich auf mechanische Stöße, Luftströmungen etc. und neigen zum Umfallen.

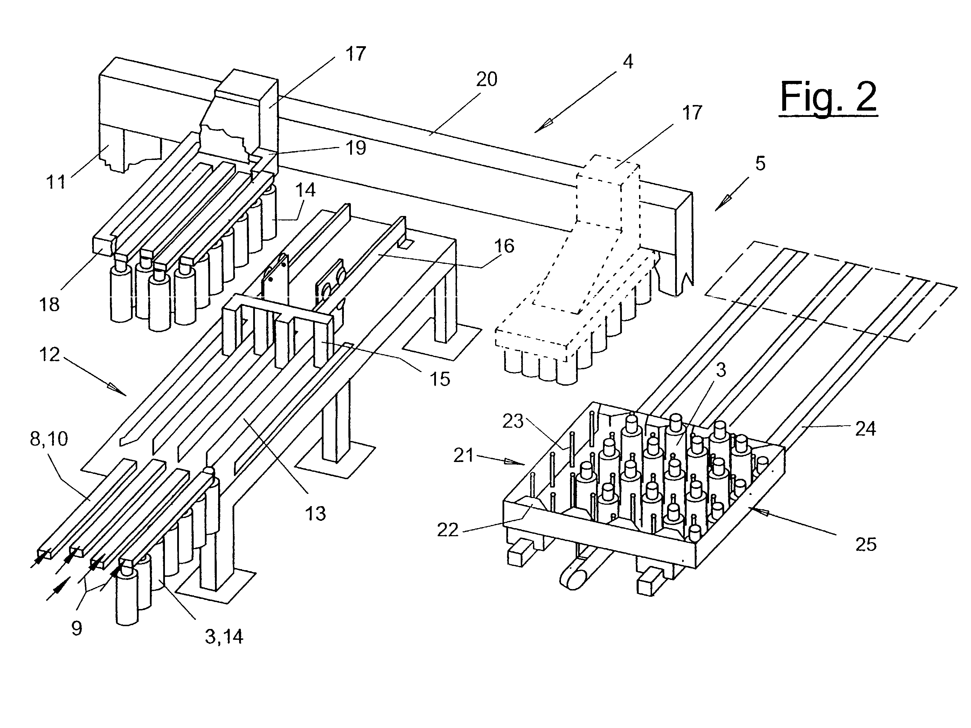

Figur 2 verdeutlicht den Mündungs- oder Endbereich (10) des Flaschenförderers (8) an der Sammeleinrichtung (4). Hier kommen die Flaschen (3) strangweise in Reihen oder Schlangen hintereinander an und werden durch steuerbare Verschlüsse (nicht dargestellt) am Ende des Förderers (8) gestoppt. In diesem Bereich ist eine Stau- oder Auslaufstrecke, in der auch z.B. die Förderluft abgeblasen wird. Die im Endbereich (10) befindlichen Flaschen (3) werden von hinten durch die nachdrängenden Flaschen nach vorn getrieben. Aus Figur 2 ist auch ersichtlich, wie die Flaschen (3) am Kragen in den Förderkanälen hängen.

Figur 2 zeigt eine Ausführungsform der Sammeleinrichtung (4) im einzelnen. Die Sammeleinrichtung (4) besteht jeweils aus mindestens einer Reihenaufnahme (12) und mindestens einem Umsetzer (5) sowie vorzugsweise mehreren Zwischenträgern (6). Die Sammeleinrichtung (4) weist mehrere formschlüssige Flaschenführungen (13,18,21) auf. Dadurch werden die Flaschen (3) vom Flaschenförderer (8) reihenweise übernommen, auf den Zwischenträger (6) umgesetzt, zu einer Flaschenlage (25) gruppiert und dann dem Palettierer (7) zugerührt, wobei die Flaschen (3) vorzugsweise und im wesentlichen ständig so geführt sind, daß sie nicht umfallen können und sich nur in begrenzter und kontrollierter Weise bewegen können. Der Zwischenträger (6) steht während des Umsetz- und Beladevorgangs.

Die Reihenaufnahme (12) ist an den Endbereich (10) des Flaschenförderers (8) angeschlossen. Die Reihenaufnahme (12) besitzt einen beispielsweise stationären Stautisch mit mehreren Aufnahmegassen und geländerartigen Flaschenführungen (13), die sich in entsprechender Zahl und in Verlängerung der Endbereiche (10) des Flaschenförderers (8) erstrecken und die vom Flaschenförderer (8) übernommenen Flaschen (3) seitlich führen. Die Geländer (13) sind in ihrer Weite verstellbar und lassen sich auf verschiedene Flaschenformate anpassen. Außerdem können sie seitlich verschoben werden, um in ihrer Zahl und Anordnung gegenüber dem Flaschenförderer (8) angepaßt zu werden. An den fördererseitigen Enden können die Geländer (13) schräge Leitflächen zum Angleiten und Führen der Flaschen (3) haben.

Auf dem Stautisch (12) können die Flaschen (3) stehend entlangrutschen. Alternativ kann der Stautisch (12) auch statt der stationären Grundfläche ein Förderband oder dergleichen aufweisen, das sich in Förderrichtung der Flaschen (3) bewegt. Zur Aufnahme der Flaschen (3) werden die Verschlüsse der Endbereiche (10) taktweise geöffnet, so daß die hier gehaltenen Flaschenreihen (14) auf den Stautisch (12) geschoben werden können. Sobald die vorgegebene Reihenlänge erreicht ist, schließen wieder die Verschlüsse der Endbereiche (10), so daß sich die nächste Flaschencharge aufstauen kann.

Die Reihenaufnahme (12) hat im Bereich der Flaschenführungen (13) jeweils mindestens einen Anschlag (15). Die Anschläge (15) können in der einfachsten Ausführungsform stationär angeordnet sein. Sie haben dabei von Reihe zu Reihe einen periodischen axialen Versatz, der vorzugsweise die Hälfte des Flaschendurchmessers beträgt. Dadurch werden die benachbarten Flaschenreihen (14) so gegeneinander versetzt angeordnet, daß ein Lückenschluß und in der späteren Flaschenlage (25) eine möglichst dichte Flaschenpackung entsteht.

In der gezeigten Ausführungsform sind die Anschläge (15) außerdem axial beweglich und besitzen hierfür einen gesteuerten Antrieb (16), der beispielsweise auf einer Tischverlängerung oder unterhalb des Stautisches (12) angeordnet ist. Bei der Übernahme einer neuen Flaschenladung werden die Anschläge (15) unmittelbar vor dem Endbereich (10) des Flaschenförderers (8) positioniert. Sobald die Verschlüsse des Endbereichs (10) öffnen und die Flaschen (3) herausdrängen, weichen die Anschläge (15) gesteuert zurück und bieten dadurch den aufgenommenen Flaschen (3) eine axiale Führung. Die Flaschen (3) können dadurch bei der Aufnahme nicht umgeworfen werden. Insgesamt sind bei der Aufnahme die Flaschen (3) rundum an vier Seiten formschlüssig geführt, wobei die rückwärtige Führung durch die nächstfolgende Flasche (3) in der Reihe erfolgt.

Nach der Übernahme stehen die Flaschenreihen (14) auf der Reihenaufnahme (12) für den Umsetzer (5) bereit. Der Umsetzer (5) ist vorzugsweise als zwei- oder mehrachsiger Roboter (11) mit frei steuer- und programmierbaren Achsen ausgebildet und besitzt eine quer zu den Flaschenreihen (14) sich erstreckende portalartige Traverse (20), an der ein oder mehrere Greifeinrichtungen (17) hin und her fahren können und die Flaschenreihen (14) auf den am Vorlauf (41) bereitstehenden Zwischenträger (6) überheben oder übersetzen.

Die Greifeinrichtung (17) ist dabei als mehrachsig beweglicher Greifkopf ausgebildet. Sie besitzt mehrere Reihengreifer (18), die die Flaschenreihen (14) in der Reihenaufnahme (12) in geeigneter Weise im Kopfbereich greifen, festhalten und auf dem Zwischenträger (6) wieder abgeben. Die Reihengreifer (18) bestehen zum Beispiel aus langen Greifkanälen mit seitlichen Greifarmen, die unter die Krägen der Flaschen fassen und diese dadurch formschlüssig halten.

Die Reihengreifer (18) können ein oder mehrere Verstelleinrichtungen (19) aufweisen. In der gezeigten Ausführungsform erlaubt die Verstelleinrichtung (19) eine Seitenbewegung der Reihengreifer (18), wodurch die Flaschenreihen (14) nach der Aufnahme enger zusammenrücken können. Im Endbereich (10) und der Reihenaufnahme (12) sind die Flaschenreihen (14) wegen Formatanpassung und aus anderen baulichen Gründen ein Stück voneinander distanziert. Dieser Seitenabstand ist größer als der in der Flaschenlage (25) erwünschte Abstand. Durch die Seitenbewegung der Reihengreifer (18) können die Flaschenreihen (14) eng aneinander geführt werden und dabei entsprechend der gewünschten Packungsdichte sogar in Kontakt miteinander gebracht werden. Die Verstelleinrichtung (19) hat hierfür einen geeigneten Antrieb nebst einer frei programmierbaren Steuerung.

Im gezeigten Ausführungsbeispiel haben die Flaschenreihen (14) und der Zwischenträger (6) die gleiche Länge. Zum Befüllen des Zwischenträgers (6) werden die Flaschenreihen (14) nebeneinandergesetzt, wobei die Greifeinrichtung (17) mehrmals hin und her fährt. In dieser gezeigten Ausführungsform ist die auf dem Zwischenträger (6) gebildete Flaschenlage (25) so groß wie der Palettenboden.

In Abwandlung der gezeigten Ausführungsform kann ein Zwischenträger (6) auch eine Überlänge haben und zwei oder mehr Flaschenlagen (25) aufnehmen. Dadurch müssen entsprechend zwei oder mehr Flaschenreihen (14) hintereinander auf dem Zwischenträger (6) angeordnet werden. Zu diesem Zweck kann die Verstelleinrichtung (19) eine zusätzliche Beweglichkeit in Reihenlängsrichtung aufweisen und dazu beispielsweise eine Teleskopeinrichtung zum Ausfahren der Reihengreifer (18) besitzen (nicht dargestellt). Außerdem führt die Verstelleinrichtung (19) die zum Umsetzen erforderlichen Hebe- und Senkbewegungen der Reihengreifer (18) aus. Beim Umsetzvorgang bilden die Reihengreifer (18) die Flaschenführung.

Auf dem vorzugsweise wannenförmigen Zwischenträger (6) ist ebenfalls eine Flaschenführung (21) vorhanden. Sie besteht beispielsweise aus einem Gefache, in dem die Flaschen (3) ähnlich wie in der Reihenaufnahme (12) stehend und rundum formschlüssig geführt sind. In der gezeigten Ausführungsform hat der Zwischenträger (6) dazu einen der Flaschenkontur nachgeformten Trägerrand (22), der durch entsprechende Vorsprünge auch den Reihenversatz berücksichtigt. Im Innenbereich des Zwischenträgers (6) sind eine Vielzahl hochstehender Führungspins (23) angeordnet, die zwischen je vier benachbarte Flaschen (3) greifen. Der Trägerrand (22) und die Führungspins (23) können Angleitschrägen für ein erleichtertes Einführen und Einsetzen der Flaschen (3) besitzen. Alternativ können die Flaschenführungen (21) auch auf beliebige andere Weise, z.B. durch Fachstege oder dergleichen, gebildet werden.

Unterschiedliche Ausführungsformen gibt es auch für den Palettierer (7). Der einzelne Palettierer (7) weist ein oder mehrere Palettierplätze (26) auf, an denen die Flaschenlagen (25) auf einem Palettenboden nach und nach zur fertigen Palette (35) aufgestapelt werden. Der Palettierplatz (26) ist seitlich neben der Endposition des Zwischenträgers (6) bzw. der Transporteinrichtung (24) angeordnet. Auf der anderen Seite können sich ein oder mehrere Einlagenstapel (27,28,29) in Reihe anschließen. Diese Stapel beinhalten die Palettenböden und die Zwischenlagen bzw. Decklagen, die für das Aufschichten der Flaschenlagen (25) erforderlich sind und nachfolgend als Palettiereinlagen bezeichnet werden. Bei den Zwischen- und Decklagen handelt es sich beispielsweise um Kartons oder andere geeignete flächige Materialien, die zwischen die Flaschenlagen (25) eingelegt werden.

Der Palettierer (7) besitzt mindestens eine Greifeinrichtung (30,31) für das Übersetzen der Flaschenlagen (25) vom Zwischenträger (6) auf den Palettierplatz und für das Holen und Einlegen der Palettiereinlagen von den Stapeln (27,28,29). In der bevorzugten Ausführungsform sind getrennte Greifeinrichtungen (30,31) vorhanden, um die Leistung zu erhöhen.

Der Palettierer (7) ist ebenfalls vorzugsweise als linearer mehrachsiger Roboter (11) ausgebildet, der eine quer zu den Flaschenreihen sich erstreckende Traverse (20) zum Verfahren der Greifeinrichtungen (30,31) aufweist. Die Greifeinrichtungen (30,31) haben geeignete Greifköpfe, die zumindest heb- und senkbar sind und eventuell weitere Bewegungsachsen haben.

Die Greifeinrichtung (31) ist als Flaschengreifer ausgebildet, der vorzugsweise die gesamte Flaschenlage (25) greift und in einem Hub auf den Palettierplatz (26) übersetzt. Die Greifeinrichtung (31) kann für die Bedienung mehrlagiger und überlanger Zwischenträger (6) eine zusätzliche axiale Verstellbarkeit in Form einer Teleskopanordnung oder dergleichen aufweisen.

Die am Palettierplatz (26) gebildeten fertigen Paletten (35) werden über Längs- und Querförderer einer Verpackungseinrichtung (nicht dargestellt) zugeführt und hier beispielsweise mit einer Plastikfolie umhüllt und gegebenenfalls zur Stabilisierung umreift. An der anschließenden Ausgabestation werden die verpackten Paletten (35) zur Abholung bereitgestellt und von hier beispielsweise in ein Zwischenlager und weiter zur Füllanlage (nicht dargestellt) gebracht.

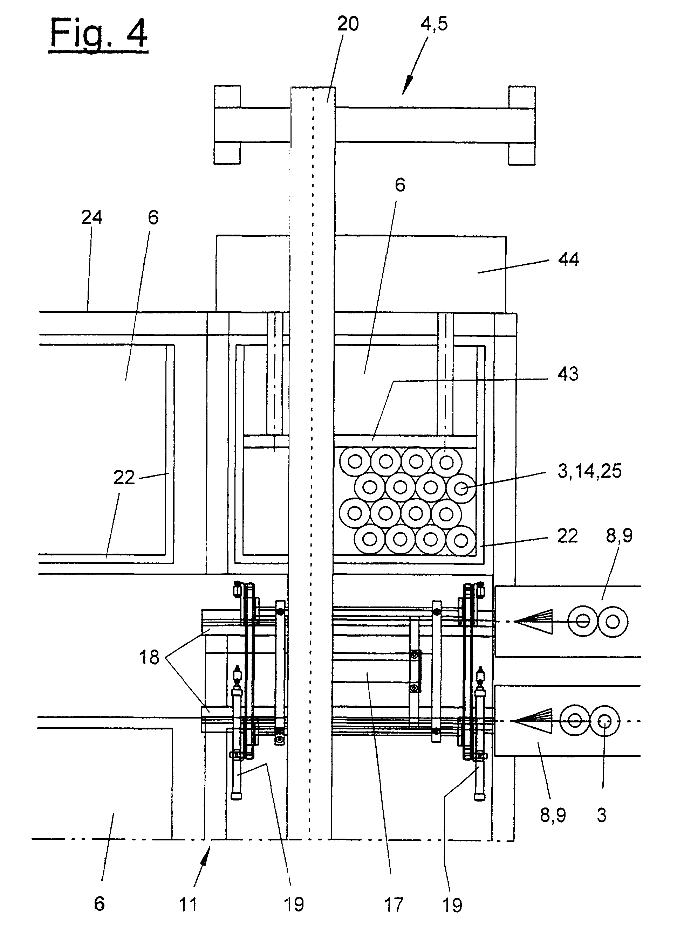

Figur 3 und 4 zeigen Abwandlungen der Sammeleinrichtung (4) bzw. des Umsetzers (5). In beiden Fällen kann der Umsetzer (5) mit der oder den Greifeinrichtungen (17) die Flaschen (3) direkt und ohne Zwischenschaltung eines Stautisches (12) von den Flaschenförderern (8) übernehmen. Hierbei sind die Reihengreifer (18) in gleicher Höhe wie die Flaschenförderer (8) angeordnet, so daß die Flaschen (3) direkt und hängend in die Reihengreifer (18) überschoben werden können. Die Verstelleinrichtungen (19) erlauben hierbei eine Anpassung und genaue Positionierung der Reihengreifer (18) an den Flaschenförderern (8). Hierbei können insbesondere auch mehrere Flaschengreifer (18) gleichzeitig beladen werden. In der gezeigten Ausführungsform hat der Greifkopf (17) zwei Flaschengreifer (18). Die Anzahl kann aber auch beliebig höher sein. Sie kann vorzugsweise mit der Zahl der Stränge (9) bzw. Flaschenförderer (8) korrespondieren. Die Zahl kann aber auch unterschiedlich sein.

Die Zwischenträger (6) in Figur 3 und 4 können der Ausführungsform von Figur 2 entsprechen. Figur 4 zeigt hierzu jedoch noch eine Abwandlung. Die Zwischenträger (6) bestehen dort aus einseitig offenen Trays mit einer ebenen Bodenplatte und drei U-förmig umlaufenden Trägerrändern (22). Anstelle der fehlenden vierten Trägerwand ist an der Beladestelle ein querbeweglicher Schieber (43) mit einem geeigneten Antrieb (44) vorgesehen. Der Schieber (43) bildet zusammen mit den vorhandenen Trägerrändern (22) die seitliche Flaschenführung (21). Bei dieser Ausführungsform hat der Zwischenträger (6) bzw. dessen Bodenplatte keine im Mittelbereich hochstehenden Führungspins (23).

Der Schieber (43) dient auch zur Positionierung und zum Zusammenschieben der Flaschen (3) auf dem Zwischenträger (6). Die Flaschenreihen (14) können vom Umsetzer (5) mit gegenseitiger seitlicher Distanz auf dem Zwischenträger (6) abgesetzt werden. Der Schieber (43) ist dazu etwas zurückgezogen und bietet den nötigen Freiraum. Anschließend fährt der Schieber (43) wieder vor und schiebt die abgestellten Flaschenreihen (14) auf die bereits eingelagerten Flaschenreihen und bildet dabei die erforderliche Packungsdichte der Flaschenlager (25). Bei dieser Vorgehensweise wird Zeit für den Umsetzer (5) gespart, was der bevorzugten Direktbeladung der Flaschengreifer (18) an den Flaschenförderern (8) zugute kommt. Außerdem können die Zwischenträger (6) dadurch beliebige Flaschenformate aufnehmen. Die Trägerränder (22) sind in diesem Fall auch als glatte Wände ohne führende Profilierung ausgebildet. In Figur 4 ist die Flaschenanordnung nur teilweise und rein schematisch dargestellt.

Für den weiteren Transport der Zwischenträger (6) kann die vierte Trägerwand entfallen. Die Flaschenlage (25) ist dann an drei Seiten umlaufend über die verbliebenen drei Trägerränder (22) geführt. Alternativ kann der Schieber (43) auch als vierte Trägerwand ausgebildet und entsprechend lösbar mit dem Antrieb (44) verbunden sein. Beim Beladen wird die Trägerwand ausgehängt und fungiert als Schieberplatte. Am Ende der Beladung wird sie in geeigneter Weise wieder mit dem Zwischenträger (6) verbunden.

Eine weitere Variante der Flaschenbehandlungsanlage (1) ist auch hinsichtlich des Zwischenträgerkreislaufs möglich. In der in Figur 1 gezeigten Ausführungsform zirkulieren die Zwischenträger (6) innerhalb der Flaschenbehandlungsanlage (1) zwischen der Sammeleinrichtung (4) und dem Palettierer (7). Sie werden permanent beladen und entladen, wobei sie im beladenen oder leeren Zustand auch zwischengespeichert werden können. In der angesprochenen Abwandlung ist es möglich, die Zwischenträger (6) auch zur Bildung der Palette (35) einzusetzen und aus der Flaschenbehandlungsanlage (1) zu entlassen. In diesem Fall haben die Zwischenträger (6) vorzugsweise die in Figur 2 gezeigten Flaschenführungen (21). Außerdem können die Zwischenträger (6) auch geeignete gegenseitige Führungen haben, um auf einfache und selbstzentrierende Weise übereinander zur Palettenbildung gestapelt werden zu können. Zu diesem Zweck ist auch der Palettierer (7) mit seinem Roboter (11) entsprechend in geeigneter Weise ausgebildet und greift statt der einzelnen Flaschenlagen (25) den ganzen Zwischenträger (6) und setzt ihn zur Palettenbildung um. Bei dieser Variante zirkulieren die Zwischenträger (6) in einem größeren Kreislauf, der über die Füllanlage, den oder die Zwischenhändler und den Kunden wieder zurück über eine Wiederaufbereitungs-oder Reinigungsanlage zum Flaschenbehandlungssystem (1) führt. Der zirkulierende Zwischenträger (6) nimmt dabei nicht nur die im Flaschenbehandlungssystem (1) aufgeladenen leeren Flaschen (3), sondern nach der Befüllung auch die vollen Flaschen auf.

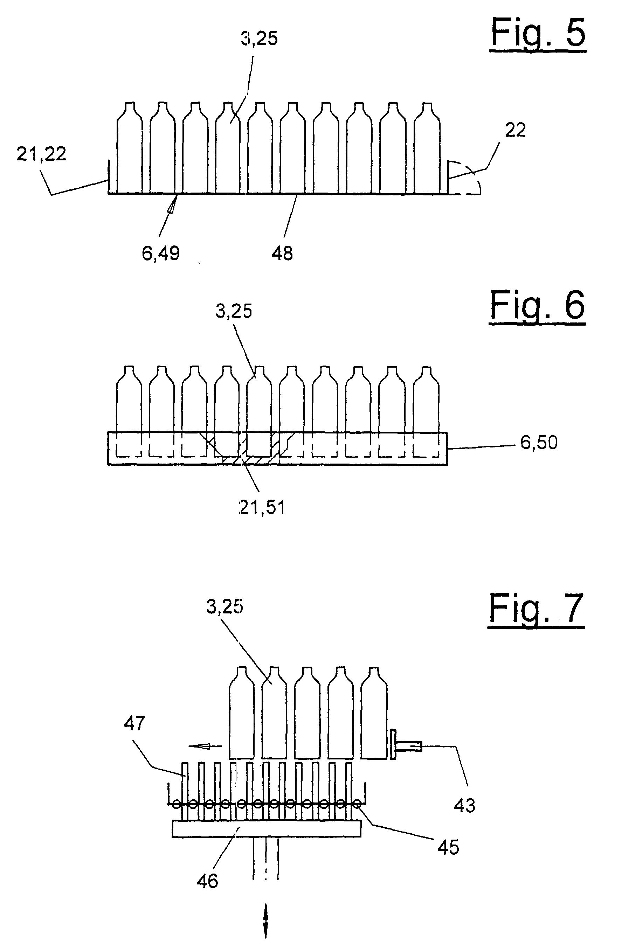

Figur 5, 6 und 7 zeigen Varianten des Zwischenträgers (6).

In Figur 5 ist eine besonders einfache Ausführungsform dargestellt, in der der Zwischenträger (6) als Stülpboden (49) ausgebildet ist. Der Stülpboden (49) besteht aus Pappe, Karton, Kunststoff oder einem anderen geeigneten Material und hat eine ebene Bodenplatte (48) mit vier hochstehenden umlaufenden und geschlossenen Rändern (22). Dieser Stülpboden (49) kann innerhalb der Flaschenbehandlungsanlage (1) kreisen. Er kann aber auch zum Palettieren der Flaschenlagen (25) verwendet werden und die Flaschenbehandlungsanlage (1) verlassen. Dementsprechend werden an der Sammeleinrichtung vier neue Stülpböden bereit gestellt. Zum Entpalettieren oder zum Entladen der Stülpböden können ein oder mehrere Ränder (22) abgerissen und umgeklappt werden, so daß die Flaschenlage (25) mit einem Schieber komplett beim Entpalettieren abgeschoben werden kann.

Figur 6 zeigt eine weitere Variante des Zwischenträgers (6), der hier als sogenannter Display-Träger (50) ausgebildet ist. Der Display-Träger (50) hat eine Flaschenführung (21) für jede einzelne Flasche (3), die z.B. als eingeformte Führungsmulde (51) ausgebildet ist. Der Display-Träger (50) besteht dazu z.B. aus einer geblasenen, geschäumten oder auf andere Weise vorzugsweise aus Kunststoff hergestellten Formplatte. Der Display-Träger (50) ist ebenfalls für einen externen Kreislauf und zum Einsatz beim Handel und gegebenenfalls auch beim Endkunden gedacht. Er eignet sich insbesondere für den Verkauf in Discounter-Geschäften, in denen die Flaschen (3) auf der Palette angeboten werden. Der Display-Träger (50) kann dabei auch mehrteilig ausgebildet sein.

Figur 7 zeigt in einer zusätzlichen Abwandlung einen Zwischenträger (6), der einen Lamellenboden (45) besitzt. In die Lamellenzwischenräume können entsprechend geformte Gegenlamellen (47) greifen, die von einer an der Sammeleinrichtung (4) vorzugsweise stationär angeordneten Hubeinrichtung (46) auf- und abbewegt werden. Zum Beladen des Zwischenträgers (6) werden die Flaschen (3) zunächst an einer entsprechend ausgebildeten Sammeleinrichtung (4) in eine oder mehreren parallelen Reihen oder gegebenenfalls auch in einer kompletten Flaschenlage (25) angeordnet und dann von einem Schieber (43) oder einem anderen geeigneten Betätigungsmittel auf die angehobenen Gegenlamellen (47) abgeschoben. Die Lamellengröße ist gegenüber der Flaschasngröße so klein gewählt, daß ein Abschieben möglich ist. Das Abschieben kann quer oder längs zur Lamellenrichtung erfolgen. Aus der in Figur 7 gezeigten erhabenen Übernahmeposition werden nach Bildung und Positionierung der fertigen Flaschenlage (25) oder zumindest einer Untergruppe die beladenen Gegenlamellen (47) abgesenkt, wobei sie nach unten aus dem Lamellenboden (45) heraustreten. Die Flaschen (3) werden dabei auf dem Lamellenboden (45) abgesetzt. Der beladene Zwischenträger (6) kann dann abtransportiert werden. Diese Form eines Lamellenträgers ermöglicht eine andere und einfachere Gestaltung der Sammeleinrichtung (4) und des Umsetzers (5), die Hebe- und Senkbewegungen der Flaschengreifer erspart und an deren Stelle reine Abschiebebewegungen ermöglicht. Die Lagenbildung aus den in Einzelreihen zugeführten Flaschen (3) kann mit Hilfe eines Rangeltisches oder auf beliebig andere geeignete Weise geschehen. Hierbei ist es insbesondere auch möglich, die Flaschen (3) zur Verminderung der Adhäsionsprobleme zunächst mit einem gewissen seitlichen Abstand zueinander in Gruppen zu positionieren und unter Lagenbildung zu sammeln. Erst beim Abschieben auf den Zwischenträger (6) oder den Gegenlamellen (47) werden die Flaschen dann zusammengeschoben und in Kontakt miteinander gebracht. Durch diese Zeitverzögerung bis zum ersten Berührungskontakt der Flaschen (3) untereinander sind die Probleme mit der Adhäsion und der elektrostatischen Aufladung häufig schon abgeklungen. Diese Technik läßt sich auch in Verbidung mit den anderen gezeigten Zwischenträgern (6) bei entsprechender technischer Anpassung einsetzen.

Abwandlungen der gezeigten und beschriebenen Ausführungsform sind in verschiedener Weise möglich. Der Flaschenförderer (8) kann in beliebig geeigneter Weise ausgebildet sein. Statt eines Luftförderers mit hängend transportierten Flaschen (3) kann auch ein Standförderer mit Rollen, Förderband oder dergleichen anderen geeigneten Transportmechanismen vorgesehen sein. Ferner kann die Zahl der Flaschenreihen (14) im Bereich des Flaschenförderers (8) und der Reihenaufnahme (12) bzw. des Umsetzers (5) variieren. Zwischen den besagten Komponenten müssen auch nicht immer die Reihenzahlen gleich sein. Entsprechendes gilt für die Greifeinrichtung (31) zum Übersetzen der Flaschenlagen (25) am Palettierplatz (26). Diese Greifeinrichtung (31) kann in der einen Variante nur einen Teil der Flaschenlage (25) greifen und übersetzen. In der anderen Variante mit überlangen Zwischenträgern (6) ist es möglich, mehrere Flaschenlagen (25) auf einmal zu greifen. In der beschriebenen Ausführungsform ist die Flaschenlage (25) so groß wie die Palettenbodenfläche. Diese Größenangabe ist eine Definitionsfrage und kann auch abgewandelt werden. Unter Umständen werden an einer Sammel- und Palettieranlage (2) auch verschiedene Palettengrößen und/oder Flaschenformate verarbeitet, so daß der Zwischenträger (6) nur teilweise befüllt ist. Variabel sind ferner auch die konstruktive Ausbildung der technischen Komponenten der Sammel- und Palettieranlagen (2), insbesondere der Reihenaufnahme (12), des Umsetzers (5), des Palettierers (7), des Zwischenträgers (6) und dergleichen. Insbesondere können die Greifeinrichtungen zum Erfassen der Flaschenreihen (14) in beliebig geeigneter Weise ausgebildet sein. Der Zwischenträger (6) kann plattenförmig sein oder eine beliebige andere geeignete Gestaltung als Behälter oder Träger für die Flaschenlagen haben.

### BEZUGSZEICHENLISTE

- 1: Flaschenbehandlungsanlage
- 2: Sammel- und Palettieranlage
- 3: Flasche
- 4: Sammeleinrichtung
- 5: Umsetzer
- 6: Zwischenträger
- 7: Flaschenbehandlungseinrichtung, Palettierer
- 8: Flaschenförderer
- 9: Strang
- 10: Endbereich
- 11: Roboter
- 12: Reihenaufnahme, Stautisch
- 13: Flaschenführung, Geländer
- 14: Flaschenreihe
- 15: Anschlag
- 16: Antrieb
- 17: Greifeinrichtung, Greifkopf
- 18: Flaschenführung, Reihengreifer
- 19: Verstelleinrichtung
- 20: Traverse
- 21: Flaschenführung
- 22: Trägerrand
- 23: Führungspin
- 24: Transporteinrichtung, Shuttle
- 25: Flaschenlage
- 26: Palettierplatz
- 27: Einlagenstapel Palettenboden
- 28: Einlagenstapel Zwischenlage
- 29: Einlagenstapel Decklage
- 30: Greiferinrichtung Palettiereinlagen
- 31: Greiferinrichtung Flaschenlage
- 32: Palettenförderer
- 33: Verpackungseinrichtung
- 34: Ausgabestation
- 35: Palette
- 36: Flaschenerzeuger, Blasmaschine
- 37: Zwischenlager
- 38: Eingabe
- 39: Ausgabe
- 40: Regalförderzeug
- 41: Vorlauf
- 42: Rücklauf
- 43: Schieber
- 44: Antrieb
- 45: Lamellenboden
- 46: Hubeinrichtung
- 47: Gegenlamellen
- 48: Boden, Bodenplatte
- 49: Stülpboden
- 50: Displayträger
- 51: Führungsmulde

## Patentansprüche

1. Anlage zum Behandeln von Flaschen (3), insbesondere von leeren Kunststoffflaschen, wobei die Behandlungsanlage (1) mindestens eine Sammeleinrichtung (4) zur Übernahme von zugeführten Flaschen (3) und mindestens eine Flaschenbehandlungseinrichtung (7), z.B. eine Füllanlage, einen Palettierer oder dgl. aufweist, **dadurch gekennzeichnet**, dass die Sammeleinrichtung (4) zum Beladen von mehreren transportablen Zwischenträgern (6) mit den Flaschen (3) vorgesehen ist, und dass die Flaschenbehandlungsanlage (1) mindestens ein anlageninternes Lager (37) zur Zwischenspeicherung von befüllten und/oder leeren Zwischenträgern (6) aufweist, wobei das Lager (37) der Flaschenbehandlungseinrichtung (7) vorgeschaltet ist und die Zwischenträger (6) mit mindestens einer Transporteinrichtung (24) in einem anlageninternen Kreislauf geführt sind.

2. Anlage nach Anspruch 1, **dadurch**
**gekennzeichnet**, daß die Zwischenträger (6) frei beweglich sind.

3. Anlage nach Anspruch 1 oder 2, dadurch
g e k e n n z e i c h n e t, daß mindestens eine im Kreis umlaufende Transporteinrichtung (24) vorgesehen ist.

4. Anlage nach Anspruch 1, 2 oder 3, **dadurch**
**gekennzeichnet**, daß die Sammeleinrichtung (4) und die Zwischenträger (6) mit Flaschenführungen (13,18,21) ausgerüstet sind.

5. Anlage nach einem der Ansprüche 1 bis 4, **dadurch**
**gekennzeichnet**, daß die Sammeleinrichtung (4) direkt an einem Flaschenerzeuger (36), insbesondere an einer Blasmaschine, oder an einem Flaschenförderer (8) angeordnet ist, wobei sie die reihenweise zugeführten Flaschen (3) unter Lagenbildung auf die Zwischenträger (6) umsetzt.

6. Anlage nach einem der Ansprüche 1 bis 5, **dadurch**
**gekennzeichnet**, daß die Zwischenträger (6) plattenartig oder palettenartig mit mindestens einem hochstehenden Rand (22), insbesondere als Stülpboden (49), ausgebildet sind.

7. Anlage nach einem der Ansprüche 1 bis 5, **dadurch**
**gekennzeichnet**, daß die Zwischenträger (6) als Displayträger (48) ausgebildet sind.

8. Anlage nach einem der Ansprüche 1 bis 5, **dadurch**
**gekennzeichnet**, daß die Zwischenträger (6) einen Lamellenboden (45) aufweisen, der mit einer stationären Hubeinrichtung (46) mit Gegenlamellen (47) zusammenwirkt.

9. Anlage nach einem der Ansprüche 1 bis 8, **dadurch**
**gekennzeichnet**, daß der Zwischträger (6) ein oder mehrere Flaschenlagen (25) aufnimmt.

10. Anlage nach einem der Ansprüche 1 bis 9, **dadurch**
**gekennzeichnet**, daß die Sammeleinrichtung (4) einen Umsetzer (5) mit mindestens einer Greifeinrichtung (17) mit mehreren seitlich verstellbaren (19) Reihengreifern (18) aufweist.

11. Anlage nach einem der Ansprüche 1 bis 10, **dadurch**
**gekennzeichnet**, daß die Sammeleinrichtung (4) einen Schieber (43) für die Flaschen (3) auf dem Zwischenträger (6) aufweist.

## Claims

1. Installation for handling bottles (3), in particular empty plastic bottles, the handling installation (1) having at least one collecting arrangement (4), for receiving bottles (3) fed, and at least one bottle-handling arrangement (7), e.g. a filling installation, a palletizer or the like, **characterized in that** the collecting arrangement (4) is provided for loading a plurality of transportable intermediate carriers (6) with the bottles (3), and in that the bottle-handling installation (1) has at least one integrated store (37) for the intermediate storage of filled and/or empty intermediate carriers (6), the store (37) being arranged upstream of the bottle-handling arrangement (7), and the intermediate carriers (6) being guided in an integrated circuit by at least one transporting arrangement (24).

2. Installation according to Claim 1, **characterized in that** the intermediate carriers (6) can be moved freely.

3. Installation according to Claim 1 or 2, **characterized in that** at least one circulating transporting arrangement (24) is provided.

4. Installation according to Claim 1, 2 or 3, **characterized in that** the collecting arrangement (4) and the intermediate carriers (6) are equipped with bottle guides (13, 18, 21).

5. Installation according to one of Claims 1 to 4, **characterized in that** the collecting arrangement (4) is arranged directly on a bottle-producing machine (36), in particular on a blow-moulding machine, or on a bottle conveyor (8), said arrangement transferring the bottles (3), which are fed in rows, onto the intermediate carriers (6) with layers being formed in the process.

6. Installation according to one of Claims 1 to 5, **characterized in that** the intermediate carriers (6) are designed in a panel-like or pallet-like manner with at least one upright border (22), in particular as a slip-on base (49).

7. Installation according to one of Claims 1 to 5, **characterized in that** the intermediate carriers (6) are designed as display carriers (48).

8. Installation according to one of Claims 1 to 5, **characterized in that** the intermediate carriers (6) have a lamellar base (45) which interacts with a stationary lifting arrangement (46) with mating lamellae (47).

9. Installation according to one of Claims 1 to 8, **characterized in that** the intermediate carrier (6) accommodates one or more bottle layers (25).

10. Installation according to one of Claims 1 to 9, **characterized in that** the collecting arrangement (4) has a transfer means (5) with at least one gripping arrangement (17) with a plurality of laterally adjustable (19) row grippers (18).

11. Installation according to one of Claims 1 to 10, **characterized in that** the collecting arrangement (4) has a pusher (43) for the bottles (3) on the intermediate carrier (6).

## Revendications

1. Installation de traitement de bouteilles (3), notamment de bouteilles en matière plastique vides, l'installation (1) de traitement comportant au moins un dispositif (4) de collecte pour prendre en charge des bouteilles (3) envoyées et au moins un dispositif (7) de traitement de bouteilles, par exemple une installation de remplissage, un dispositif de palettisation ou analogue, **caractérisée en ce que** le dispositif (4) de collecte est prévu pour le chargement de plusieurs supports (6) intermédiaires transportables comportant les bouteilles (3) et en ce que l'installation (1) de traitement de bouteilles comporte au moins un magasin (37) interne à l'installation pour emmagasiner temporairement des supports (6) intermédiaires remplis et/ou vides, le magasin (37) étant monté en amont du dispositif (7) de traitement de bouteilles et les supports (6) intermédiaires étant guidés par au moins un dispositif (24) de transport dans un circuit interne à l'installation.

2. Installation suivant la revendication 1, **caractérisée en ce que** les supports (6) intermédiaires sont librement mobiles.

3. Installation suivant la revendication 1 ou 2, **caractérisée en ce qu**'il est prévu au moins un dispositif (24) de transport faisant le tour du circuit.

4. Installation suivant la revendication 1, 2 ou 3, **caractérisée en ce que** le dispositif (4) de collecte et les supports (6) intermédiaires sont munis de dispositifs (13,18,21) pour guider les bouteilles.

5. Installation suivant l'une des revendications 1 à 4, **caractérisée en ce que** le dispositif (4) de collecte est monté directement sur un dispositif (36) de production de bouteilles, notamment sur une machine de soufflage ou sur un convoyeur (8) de bouteilles, le dispositif de collecte transférant les bouteilles (3) envoyées par série aux supports (6) intermédiaires avec formation de couches.

6. Installation suivant l'une des revendications 1 à 5, **caractérisée en ce que** les supports (6) intermédiaires sont réalisés à la façon de plateaux ou à la façon de palettes comportant au moins un bord (22) relevé, notamment en fonds (49) à rebord.

7. Installation suivant l'une des revendications 1 à 5, **caractérisée en ce que** les supports (6) intermédiaires sont réalisés en supports (48) de présentation.

8. Installation suivant l'une des revendications 1 à 5, **caractérisée en ce que** les supports (6) intermédiaires comportent un fond (45) à lamelles qui coopère avec un dispositif (46) de levage fixe à contre-lamelles (47).

9. Installation suivant l'une des revendications 1 à 8, **caractérisée en ce que** le support (6) intermédiaire reçoit une ou plusieurs couches (25) de bouteilles.

10. Installation suivant l'une des revendications 1 à 9, **caractérisée en ce que** le dispositif (4) de collecte comporte un dispositif (5) de transfert comportant au moins un dispositif (17) de préhension ayant plusieurs grappins (18) en rangée pouvant être déplacés (19) latéralement.

11. Installation suivant l'une des revendications 1 à 10, **caractérisée en ce que** le dispositif (4) de collecte comporte un poussoir (43) pour les bouteilles (3) sur le support (6) intermédiaire.
